(19) **Europäisches Patentamt**
European Patent Office
Office européen des brevets

(11) **EP 1 527 660 B1**

(12) **EUROPÄISCHE PATENTSCHRIFT**

(45) Veröffentlichungstag und Bekanntmachung des Hinweises auf die Patenterteilung:
**22.04.2009 Patentblatt 2009/17**

(21) Anmeldenummer: **03763849.1**

(22) Anmeldetag: **14.07.2003**

(51) Int Cl.:
**H05K 5/00** *(2006.01)*

(86) Internationale Anmeldenummer:
**PCT/EP2003/007616**

(87) Internationale Veröffentlichungsnummer:
**WO 2004/008820 (22.01.2004 Gazette 2004/04)**

(54) **VERDREHSICHERUNG, INSBESONDERE FÜR EIN MESSUMFORMERGEHÄUSE**

TORSIONAL FIXING DEVICE, ESPECIALLY FOR THE HOUSING OF A MEASURING TRANSDUCER

DISPOSITIF DE PROTECTION CONTRE LA TORSION, EN PARTICULIER POUR UN BOITIER DE TRANSDUCTEUR DE MESURE

(84) Benannte Vertragsstaaten:
**AT BE BG CH CY CZ DE DK EE ES FI FR GB GR HU IE IT LI LU MC NL PT RO SE SI SK TR**

(30) Priorität: **15.07.2002 DE 10232088**

(43) Veröffentlichungstag der Anmeldung:
**04.05.2005 Patentblatt 2005/18**

(73) Patentinhaber: **Endress + Hauser GmbH + Co. KG**
**79689 Maulburg (DE)**

(72) Erfinder: **TANNER, Jürgen**
**79400 Kandern (DE)**

(74) Vertreter: **Andres, Angelika Maria et al**
**Endress+Hauser (Deutschland) AG+Co. KG**
**PatServe**
**Colmarer Strasse 6**
**79576 Weil am Rhein (DE)**

(56) Entgegenhaltungen:
**EP-A- 0 074 922**    **EP-A- 0 303 399**
**EP-A- 0 818 854**    **DE-A- 3 541 390**
**DE-A- 3 828 589**    **GB-A- 1 208 725**
**US-A- 5 737 963**

## Beschreibung

Die vorliegende Erfindung betrifft Verdrehsicherungen, wie sie beispielsweise bei Gehäusen für elektrische Geräte, beispielsweise Meßumformer, Verwendung finden.

Die genannten Gehäuse sind in häufig zweiteilig gestaltet, wobei ein erster Teil des Gehäuses bezüglich eines zweiten Teil des Gehäuses um einen vorgegebenen Winkelbereich verdrehbar ist, um beispielsweise Anzeige- oder Bedienelemente, die an dem ersten Gehäuseteil angeordnet sind in eine gewünschte Orientierung zu drehen. Insofern als sich zwischen dem ersten und dem zweiten Gehäuseteil häufig Kabel erstrecken, ist der Winkelbereich der Verdrehung zu begrenzen, um eine Beschädigung der Kabel oder damit verbundener Komponenten zu verhindern.

Differenzdruckmeßumformer der Anmelderin, die unter dem Namen "Deltabar" vertrieben werden, weisen die nachfolgend beschriebene Verdrehsicherung auf. Das erste Gehäuseteil weist einen röhrenförmigen ersten Verbindungsflansch mit einem Innengewinde auf, der auf ein Außengewinde eines komplementären zweiten Verbindungsflansches des zweiten Gehäuseteils aufgeschraubt ist. Von der zylindrischen Mantelfläche des zweiten Verbindungsflansches erstreckt sich in einem Abschnitt der axial von dem ersten Verbindungsflansch beabstandet ist, ein Anschlagdorn radial nach außen. Nach dem Aufschrauben des ersten Verbindungsflansches auf den zweiten Verbindungsflansch wird an der äußeren Mantelfläche des ersten Verbindungsflansches eine Metallzunge montiert, die sich in axialer Richtung über den ersten Verbindungsflansch und hinaus erstreckt und mit dem Anschlagdorn in axialer Richtung überlappt. Die Verdrehung des zweiten Verbindungsflansches gegenüber dem ersten Verbindungsflansch ist somit in beiden Richtungen durch den Anschlag der Metallzunge am Anschlagdorn begrenzt.

Wenngleich die beschriebene Verdrehsicherung zuverlässig ist, so ist die Herstellung und Montage doch aufwendig.

Das beschriebene Problem betrifft nicht nur Drucksensoren sondern alle Sensoren der industriellen Prozeßmeßtechnik, insbesondere Durchflußsensoren, Viskositätssensoren, Füllstandssensoren, einen pH-Sensoren oder andere potentiometrische Sensoren, Temperatursensoren, Feuchtesensoren, Gassensoren, oder Trübungssensoren.

Vorrichtungen mit Verdrehsicherungen sind aus DE 3 541 390, EP 0 074 922, EP 0 303 399, DE 196 52 094 sowie US 4 756 207 bekannt.

Der vorliegenden Erfindung liegt daher die Aufgabe zugrunde, eine Vorrichtung mit Verdrehsicherung bzw. Verdrehbegrenzung für miteinander verschraubte Teile, insbesondere Gehäuseteile, der Vorrichtung, bereitzustellen.

Die Aufgabe wird erfindungsgemäß gelöst durch die Vorrichtung gemäß des unabhängigen Patentanspruchs 1.

Eine axiale Sperre umfaßt bevorzugt an mindestens einem der Elemente, d.h. dem Gehäuseelement oder dem zweiten Element eine vorzugsweise rotationssymmetrische axiale Anschlagfläche, die als Anschlag für ein Sperr- bzw. Kopplungsglied dient, welches mit dem jeweils anderen Element derart gekoppelt ist, daß die Bewegungsfreiheit des Sperrgliedes bezüglich des anderen Elementes zumindest in axialer Richtung eingeschränkt ist. Die Einschränkung der Bewegungsfreiheit kann ebenfalls durch axiale Anschlagflächen an dem anderen Element gewährleistet werden, oder des Sperrglied kann fest mit dem anderen Element verbunden sein.

Axiale Anschlagflächen können insbesondere durch radiale Stufen in zwischen zwei koaxialen zylindrischen Abschnitten gebildet werden. Zu diesem Zweck kann die Mantelfläche des Gehäuseelements, bzw. des zweiten Elements entsprechende zylindrische Abschnitte aufweisen. Insbesondere kann auf der Mantelfläche eines zylindrischen Abschnitts des Gehäuseelements oder des zweiten Elements eine ringförmig verlaufende Nut vorgesehen sein, die sich radial einwärts erstreckt und in axialer Richtung durch eine erste und eine zweite radiale Stufe begrenzt ist, wobei die erste und die zweite radiale Sufe jeweils als axiale Anschlagfläche für eine der beiden axialen Sperren dient.

Gleichermaßen kann das Gehäuseelement oder das zweite Element mindestens eine Öffnung mit zylindrischen Abschnitten mit unterschiedlichen Radien umfaßt, deren Rotationsachse mit der Achse der Gewinde fluchtet, wobei zwischen mindestens zwei Abschnitten mit unterschiedlichen Radien eine radiale Stufe ausgebildet ist, die als axiale Anschlagfläche für eine axiale Sperre der Verdrehsicherung dient. Insbesondere kann in der Mantelfläche einer zylindrischen Öffnung des Gehäuseelements oder des zweiten Elements eine ringförmig verlaufende Nut vorgesehen sein, die sich radial auswärts erstreckt und in axialer Richtung durch eine erste und eine zweite radiale Stufe begrenzt ist, wobei die erste und die zweite radiale Sufe jeweils als axiale Anschlagfläche für eine der beiden axialen Sperren dient.

Als Sperrglied kann beispielsweise ein Stift oder ein Vorsprung vorgesehen sein der mit dem jeweils anderen Element fest verbunden ist, und radial einwärts bzw. radial auswärts in die Nut hineinragt.

Derzeit besonders bevorzugt ist eine Ausführungsform, bei der sich ein Sperrring mit einer ersten sich radial auswärts erstreckenden Nut und einer zweiten sich radial einwärts erstreckenden Nut in Eingriff befindet, wobei die erste Nut in der Mantelfläche einer zylindrischen Öffnung im Gehäuseelement bzw. im zweiten Element angeordnet ist und wobei das andere Element einen zylindrischen Abschnitt aufweist in dessen Mantelfläche die zweite Nut angeordnet ist, wobei der zylindrische Abschnitt derart in der zylindrischen Öffnung angeordnet ist, daß die erste Nut mit der zweiten Nut in axialer Richtung zumindest teilweise überlappt.

Der Sperring ist in einer besonders bevorzugten Ausführungsform ein Federring, bzw. eine Ringscheibe die radial flexibel ist.

Der Sperring umfaßt vorzugsweise ein weicheres Material als das Material in denen die Nuten ausgebildet sind. Beisielsweise kann das Gehäuseelement und das zweite Element zumindest abschnittsweise ein Metall, insbesondere Stahl, Gußeisen, oder Aluminium aufweisen, während der Sperring bevorzugt einen Kunststoff, insbesondere ein Elastomer oder ein thermoplastisches Material aufweist.

In einer derzeit bevorzugten Ausführungsform ist das Verschrauben des Gehäuseelementes mit dem zweiten Element unter Einsatz des Sperrings insoweit irreversibel, als das Lösen der Schraubverbindung ohne eine Zerstörung des Sperrings nicht möglich ist. Der Sperring kann daher auch die Funktion eines Sigels wahrnehmen, dessen Unversehrtheit beispielsweise die Voraussetzung für Garantieleistungen sein kann.

Die axiale Dimension des Sperrrings, d.h. insbesondere seine Materialstärke, ist vorzugsweise so auf die Breite der ersten und der zweiten Nut abgestimmt, daß die Summe der Breiten der ersten und der zweiten Nut minus der doppelten axialen Dimension dem axialen Hub entspricht, der bei der gegebenen Steigung der Gewinde durch eine Verdrehung des Gehäuseelements gegenüber dem zweiten Element um den maximal zulässigen Verdrehwinkel bewirkt wird.

Der maximale Verdrehwinkel sollte nicht mehr als zwei 720°, also zwei volle Umdrehungen betragen. In einer derzeit bevorzugten Ausführungsform beträgt der maximale Verdrehwinkel 360°. Damit können das Gehäuseelement und das zweite Element beliebige Orientierungen zueinander einnehmen. Dies ist insbesondere für Ausführungsformen von Interesse, bei denen das Gehäuseelement ein Anzeigefeld und/oder Bedienelemente aufweist, die für einen Bediener optimal auszurichten sind.

Für Anwendungen in der Prozeßmeßtechnik umfaßt das Gehäuseelement bevorzugt ein Meßumformergehäuse, wobei das zweite Element vorzugsweise ein Anschlußadapter oder ein Sensorgehäuse zum Anschluß an das Meßumformergehäuse aufweist.

Die Erfindung wird nun anhand eines in den Zeichnungen dargestellten Ausführunsbeispiels erläutert. Es zeigt:

Fig.1:  eine perspektivische Ansicht einer erfindungsgemäßen Vorrichtung, die einen Meßumformer und einen Sensor aufweist;

Fig. 2:  eine Detailansicht eines Längsschnitt durch die Erfindungsgemäße Vorrichtung, wobei die Verbindung zwischen dem Meßumformergehäuse und dem Sensorgehäuse dargestellt ist; und

Fig. 3:  einen Sperring einer erfindungsgemäßen Vorrichtung.

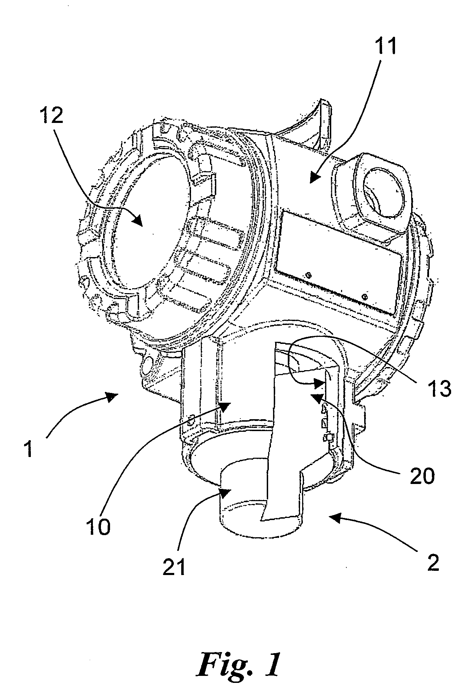

Das in Fig. 1 gezeigte Meßumformergehäuse 1 weist einen trommelförmigen Gehäuseabschnitt 11 auf, in dem gewöhnlich Elektronikkomponenten, insbesondere zur Datenkommunikation, angeordnet sind. In der Mantelfläche des trommelförmigen Gehäuseabschnitts 11 ist eine Öffnung vorgesehen, die von einem im wesentlichen röhrenförmigen Anschlußflansch 10 umgeben ist, in den ein Sensorelement 2 eingeschraubt ist. In Fig. 1 ist dieses Sensorelement 2 als massiver Block dargestellt, da es im Zusammenhang der vorliegenden Erfindung nicht auf die innere Struktur des Sensorelements 2 ankommt. Das Sensorelement 2 weist einen zumindest abschnittsweise zylindrischen-Umformeranschluß 20 auf, der in die Öffnung 20 des röhrenförmigen Anschlußflansches 10 geschraubt ist. Hierzu ist auf der Mantelfläche des Umformeranschluß 20 ein Gewindeabschnitt vorgesehen, welcher mit einem komplementären Innengewinde 13, an der inneren Wandung des Anschlußflansches 10 in Eingriff gelangt. Das Sensorelement 2 weist in diesem Ausführungsbeispiel zudem einen zylindrischen Prozeßanschlußzapfen 21 auf, dessen Mantelfläche mit einem Gewinde versehen ist, mit dem das Sensorelement beispielsweise an einer geeigneten Behälter- oder Leitungsöffnung befestigt werden kann. Für den Fachmann ist selbstverständlich, daß geeignete Dichtungen vorzusehen sind, worauf im Zusammenhang der vorliegenden Erfindung nicht im Detail einzugehen ist.

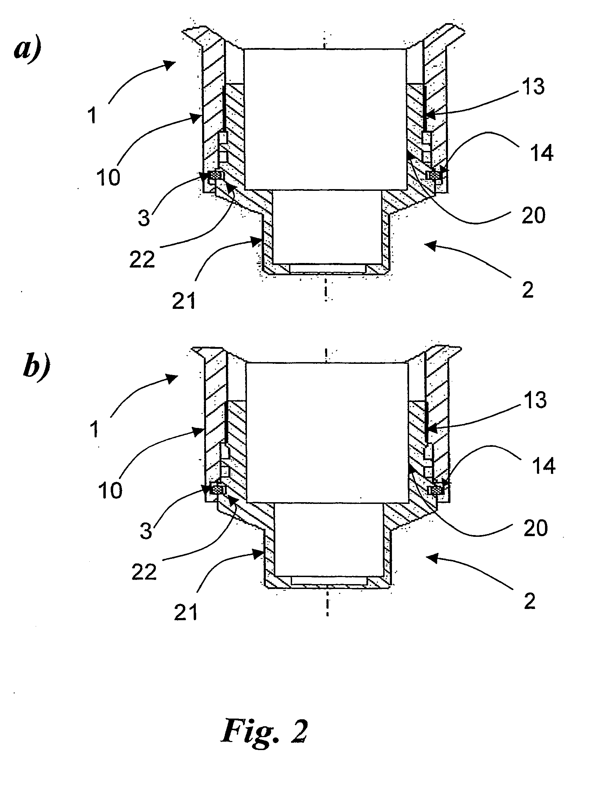

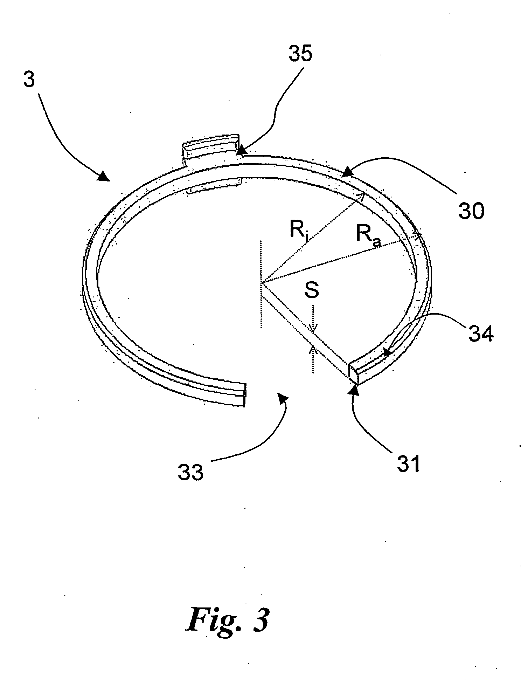

Das Meßumformergehäuse 1 weist an einer Stirnseite des trommelförmigen Gehäuseabschnitts 11 ein Anzeigefeld 12 auf. Um dieses Anzeigefeld in beliebige Orientierungen drehen zu können, muß das Meßumformergehäuse bezüglich des Sensorelements 2 verdrehbar sein. Die Verdrehbarkeit ist jedoch auf einen kleinen Winkelbereich beschränkt, um beispielsweise eine Beschädigung von Kabeln zu vermeiden, die sich vom Sensorelement 2 in das Umformergehäuse 1 erstrecken. Dies wird durch die erfindungsgemäße Verdrehsicherung gewährleistet welche mittels zweier axialer Sperren die axiale Position des Umformergehäuses 1 bezüglich des Sensorelementes 2 auf einen Bereich beschränken, der aufgrund der Steigung des Innengewindes 13 beim Drehen des Umformergehäuses 1 um die Gewindeachse um den maximal zulässigen Drehwinkel überstrichen wird. Einzelheiten zur Verdrehsicherung werden nun anhand von Fign. 2 und 3 erläutert.

Fig. 2 zeigt zwei Ansichten eines Längsschnitts durch den röhrenförmigen Anschlußflansch 10 des Umformergehäuses 1, in den der Umformeranschluß 20 des Sensorelements 2 in verschiedenen axialen Positionen eingeschraubt ist.

Der röhrenförmige Anschlußflansch 10 weist in seiner inneren Wandung eine erste Ringnut 14 auf, die sich radial auswärts erstreckt. Die erste Ringnut 14 ist durch zwei radiale Stufen begrenzt, deren axialer Abstand zueinander die erste Breite $B_1$ der ersten Ringnut

14 definiert. In ähnlicher Weise weist der Umformeranschluß 20 auf seiner Mantelfläche eine Ringnut 22 auf die sich radial einwärts erstreckt. Die zweite Ringnut 22 ist entsprechend durch zwei radiale Stufen begrenzt, deren axialer Abstand zueinander die zweite Breite $B_2$ der zweiten Ringnut 22 definiert.

Die radialen Stufen, welche die erste und die zweite Ringnut begrenzen, dienen als axiale Anschlagflächen für einen Sperring 3. Der Sperring 3 befindet sich sowohl mit der ersten Ringnut 14 als auch der zweiten Ringnut 22 in Eingriff, d.h. der äußere Radius $R_a$ des Sperrings 3 ist größer als der Radius der Innenwand des Anschlußflansches 10 in dem Abschnitt, von dem sich die erste Ringnut 14 radial auswärts erstreckt, und der innere Radius $R_i$ des Sperrings 3 ist kleiner als der Radius der Mantelfläche des Anschlußflansches 20 in dem Abschnitt, von dem sich die zweite Ringnut 22 radial einwärts erstreckt.

Der Sperring 3 weist eine obere und eine untere Stirnfläche 30, 31 auf, die bevorzugt zumindest abschnittsweise zueinander parallel sind. Die Stirnflächen 30, 31 bilden zusammen mit den axialen Anschlagflächen, axiale Sperren zur Begrenzung der Bewegung des Umformergehäuses 1 bezüglich des Sensorelements 2. Die Wirkung der axialen Sperren ist nachfolgend beschrieben. Die Begriffe "oben" bzw. "unten" bezeichnen in diesem Zusammenhang die dem Prozeßanschluß zugenwandte bzw. abgewandte Richtung.

Die Teilfigur a) von Fig. 2 zeigt die Situation, in der das Umformergehäuse 1 die untere Extremalposition bezüglich des Sensorelements 2 erreicht hat. In dieser Situation stößt der innere Bereich der unteren Stirnfläche 31 gegen die untere axiale Anschlagfläche, welche die zweite Ringnut 22 begrenzt, und der äußere Bereich der oberen Stirnfläche 30 stößt gegen die obere axiale Anschlagfläche, welche die erste Ringnut 14 begrenzt.

Die Teilfigur b) von Fig. 2 zeigt die Situation, in der das Umformergehäuse 1 die obere Extremalposition bezüglich des Sensorelements 2 erreicht hat. In dieser Situation stößt der äußere Bereich der unteren Stirnfläche 31 gegen die untere axiale Anschlagfläche, welche die erste Ringnut 14 begrenzt, und der innere Bereich der oberen Stirnfläche 30 stößt gegen die obere axiale Anschlagfläche, welche die zweite Ringnut 22 begrenzt.

Der Sperring 3 weist im Bereich der ersten Ringnut eine erste axiale Stärke $S_1$ und im Bereich der zweiten Ringnut eine zweite axiale Stärke $S_2$ auf, wobei bei der derzeit bevorzugten Ausführungsform, die erste axiale Stärke $S_1$ gleich der zweiten axialen Stärke $S_2$ ist ($S_1=S_2=S$). Grundsätzlich können diese jedoch auch voneinander abweichen. Die erste axiale Stärke $S_1$ und die zweite axiale Stärke $S_2$ des Sperrings sowie die erste Breite $B_1$ der ersten Ringnut und die zweite Breite $B_2$ der zweiten Ringnut sind so aufeinander abgestimmt, daß gilt:

$$(B_1-S_1)+(B_2-S_2) = H(\phi_{max}),$$

wobei $H(\phi_{max})$ der axiale Hub des Gewindes 113 ist, welcher mit einer Verdrehung des Umformergehäuses 1 um den maximalen Verdrehwinkel $\phi_{max}$ einher geht. Für $S_1=S_2=S$ gilt entsprechend:

$$B_1+B_2 - 2S = H(\phi_{max})$$

Der maximale Verdrehwinkel $\phi_{max}$ beträgt bei einer derzeit bevorzugten Ausführungsform etwa 360°. Damit kann das Umformergehäuse 1 jede mögliche Orientierung bezüglich des Sensorelementes 2 einnehmen und Verbindungskabel, die sich zwischen dem Sensorelement 2 und dem Umformergehäuse 1 erstrecken, werden maximal mit einer Umdrehung belastet.

Der in Fig. 3 gezeigte Sperring 3 weist an der Außenkante seiner oberen Stirnfläche 30 eine abgeschrägte Fläche 34 auf. Zudem ist der Ring durch einen Schlitz 33 unterbrochen, um die Montage des Umformergehäuses 1 auf dem Sensorelement 2 zu erleichtern. Der Sperring dieser Ausführungsform ist vorzugsweise aus einem elastischen Material gefertigt. Zur Montage wird zunächst der elastische Sperring 3 in die zweite Ringnut 22 eingesetzt. Anschließend wird das Umformergehäuse 1 auf das Sensorelement 2 geschraubt, wobei der Sperring 3 durch die Innenwand des Anschlußflansches 10 vollständig in die zweite Ringnut 22 gedrückt wird, bis die erste 14 Ringnut so weit mit der zweiten Ringnut überlappt, daß der Sperring 3 sich entspannen und in die erste Ringnut 14 eingreifen kann, wodurch die Verdrehsicherung hergestellt ist.

Der in Fig. 3 gezeigte Vorsprung 35 ist eine optionale Rotationsfixierung des Sperrings bezüglich des Umformergehäuses 1, die jedoch nicht erfindungswesentlich ist. Bei Ausführungsformen mit einer solchen Rotationsfixierung ist in der Innenwandung des Anschlußflansches 10 eine Nut in axialer Richtung vorzusehen, welche den Vorsprung mit hinreichendem axialen Spiel aufnimmt.

Eine weitere Ausführungsform unterscheidet sich von der zuvor beschriebenen darin, daß kein Sperring und keine erste Ringnut vorgesen sind. Stattdessen erstreckt sich mindestens ein Sperrkörper, beispielsweise ein Sperrstift, der fest mit dem Anschlußflansch 20 verbunden ist, in die zweite Ringnut. In diesem Fall entspricht die Differenz zwischen der zweiten Breite axialen Dimension des Sperrkörpers dem Gewindehub beim Verdrehen des Umformergehäuses um den maximalen Winkel.

Der Sperrstift kann beispielsweise als Bolzen ausgebildet sein, der in eine radiale durchgehende Gewindebohrung in der Mantelfläche des Anschlußflansches 10 geschraubt wird, wenn die Gewindebohrung mit der zweiten Ringnut überlappt. Optional kann eine eine Klemmschraube vorgesehen sein, welche eine bevorzugte Orientierung des Umformergehäuses bezüglich des Sensorelementes fixiert. Eine radiale Gewindebohrung zur Aufnahme der Klemmschraube kann insbesondere als koaxiale Gewindebohrung durch den Sperrstift ausgebildet sein.

**Patentansprüche**

1. Vorrichtung mit
   einem Messumformergehäuse (1), welches ein erstes Gewinde aufweist;
   einem Sensorelement (2) welches ein zweites Gewinde (13) aufweist, welches zu dem ersten Gewinde komplementär ist und sich mit diesem in Eingriff befindet;
   wobei das Messumformergehäuse und das Sensorelement um die Achse der beiden Gewinde gegeneinander verdrehbar sind, und das Verdrehen aufgrund der Steigung der Gewinde (13) eine Veränderung der axialen Position zueinander bewirkt;
   Kabeln, die sich vom Sensorelement (2) in das Messumformergehäuse 1 erstrecken; und
   einer Verdrehsicherung um eine Beschädigung der Kabel zu vermeiden, welche die Verdrehbarkeit des Messumformergehäuses gegenüber dem Sensorelement auf einen Winkelbereich beschränkt, **dadurch gekennzeichnet, dass**
   die Verdrehsicherung zwei axiale Sperren (3, 14, 22) umfasst, so dass die axiale Position des Messumformergehäuses bezüglich des zweiten Elements auf einen Bereich zwischen zwei Extremalpositionen beschränkt ist, der durch die axialen Sperren begrenzt ist, wobei die axialen Sperren (3, 14, 22) so angeordnet sind, dass die Differenz zwischen den Extremalpositionen dem axialen Hub entspricht, der bei der gegebenen Steigung der Gewinde durch eine Verdrehung des Messumformergehäuses (1) gegenüber dem Sensorelement (2) um einen maximal zulässigen Verdrehwinkel bewirkt wird.

2. Vorrichtung nach Anspruch 1, wobei das Messumformergehäuse (1) oder das Sensorelement (2) mindestens zwei zylindrische Abschnitte (10, 14, 20, 22) mit unterschiedlichen Radien umfasst, deren Rotationsachse mit der Achse der Gewinde fluchtet, wobei zwischen den mindestens zwei Abschnitten mit unterschiedlichen Radien eine radiale Stufe ausgebildet ist, die als axiale Anschlagfläche für eine axiale Sperre der Verdrehsicherung dient.

3. Vorrichtung nach Anspruch 2, wobei das Messumformergehäuse oder das Sensorelement einen zylindrischen Abschnitt umfasst, dessen Mantelfläche eine ringförmig verlaufende Nut (22) umfasst, die sich radial einwärts erstreckt und in axialer Richtung durch eine erste und eine zweite radiale Stufe begrenzt ist, wobei die erste und die zweite radiale Stufe jeweils als axiale Anschlagfläche für eine der beiden axialen Sperren dient.

4. Vorrichtung nach einem der Ansprüche 1 bis 3, wobei das Messumformergehäuse oder das Sensorelement mindestens eine Öffnung mit zylindrischen Abschnitten mit unterschiedlichen Radien umfasst, deren Rotationsachse mit der Achse der Gewinde fluchtet, wobei zwischen den mindestens zwei Abschnitten mit unterschiedlichen Radien eine radiale Stufe ausgebildet ist, die als axiale Anschlagfläche für eine axiale Sperre der Verdrehsicherung dient.

5. Vorrichtung nach einem der Ansprüche 1 bis 4, wobei das Messumformergehäuse oder das Sensorelement eine zylindrischen Öffnung umfasst, deren Mantelfläche eine ringförmig verlaufende Nut (14) aufweist, die sich radial auswärts (14) erstreckt und in axialer Richtung durch eine erste und eine zweite radiale Stufe begrenzt ist, wobei die erste und die zweite radiale Stufe jeweils als axiale Anschlagfläche für eine der beiden axialen Sperren dient.

6. Vorrichtung nach Anspruch 5 und nach Anspruch 3, wobei die Verdrehsicherung weiterhin ein Kopplungselement (3) umfasst, welches sich sowohl mit der sich radial auswärts erstreckenden Nut (14) als auch mit der sich radial einwärts erstreckenden Nut (22) in Eingriff befindet.

7. Vorrichtung nach Anspruch 6, wobei das Kopplungselement eine Ringscheibe (3) aufweist.

8. Vorrichtung nach Anspruch 7, wobei die Ringscheibe (3) radial flexibel ist.

9. Vorrichtung nach einem der Ansprüche 6 bis 8 wobei die sich radial einwärts erstreckende Nut in axialer Richtung eine erste Breite aufweist, und die sich radial auswärts erstreckende Nut in axialer Richtung eine zweite Breite aufweist, wobei die axiale Stärke des Kopplungselement so gewählt ist, dass die Summe der ersten Breite und der zweiten Breite minus der doppelten axialen axialen Stärke dem axialen Hub entspricht, der bei der gegebenen Steigung der Gewinde durch eine Verdrehung des Gehäuseelements gegenüber dem zweiten Element um den maximal zulässigen Verdrehwinkel bewirkt wird.

10. Vorrichtung nach einem der vorhergehenden Ansprüche, wobei das Sensorelement (2) einen Sensor der industriellen Prozessmesstechnik, insbesondere einen Drucksensor, einen Durchflusssensor, einen Viskositätssensor, einen Füllstandssensor, einen pH-Sensor oder einen anderen potentiometrischen Sensor, einen Temperatursensor, einen Feuchtesensor, einen Gassensor, oder einen Trübungssensor umfasst.

## Claims

1. Unit with:

    A transmitter housing (1) which exhibits a first thread;
    A sensor element (2) which exhibits a second thread (13) that is complementary to the first thread and is engaged with the first thread;

    **Characterized in that** the transmitter housing and the sensor element can be twisted counter to one another around the axis of the two threads, with the twisting causing a change in the axial position towards one another due to the pitch of the thread (13); Cables that extend from the sensor element (2) into the transmitter housing (1); A twist protection unit to prevent damage to the cables, said protection unit limiting the ability of the transmitter housing to twist vis-à-vis the sensor element to an angular range, **characterized in that**:

    The twist protection unit comprises two axial stops (3, 14, 22) so that the axial position of the transmitter housing with regard to the second element is limited to a range between two extremal positions, said range being limited by the axial stops, whereby the axial stops (3, 14, 22) are arranged in such a way that the difference between the extremal positions corresponds to the axial travel which, with the given thread pitch, is caused by the transmitter housing (1) twisting vis-à-vis the sensor element (2) by a maximum permitted angle of twist.

2. Unit as per Claim 1, where the transmitter housing (1) or the sensor element (2) comprises at least two cylindrical sections (10, 14, 20, 22) with different radii whose axis of rotation is aligned with the axis of the thread, whereby a radial step is formed between the two sections (at least) with different radii, said step serving as an axial stop face for an axial stop of the twist protection unit.

3. Unit as per Claim 2, where the transmitter housing or the sensor element comprises a cylindrical section whose shell comprises an annular groove (22) which extends radially inwards and is limited axially by a first and second radial step, whereby the first and second radial step each serves as an axial stop face for one of the two axial stops.

4. Unit as per one of the Claims 1 to 3, where the transmitter housing or the sensor element comprises at least one opening with cylindrical sections with different radii whose axis of rotation is aligned with the axis of the thread, whereby a radial step is formed between the two sections (at least) with different radii, said step serving as an axial stop face for an axial stop of the twist protection unit.

5. Unit as per one of the Claims 1 to 4, where the transmitter housing or the sensor element comprises a cylindrical opening whose shell exhibits an annular groove (14) which extends radially outwards and is limited axially by a first and second radial step, where the first and second radial step serves as an axial stop face for one of the two axial stops.

6. Unit as per Claim 5 and Claim 3, where the twist protection unit further comprises a coupling element (3) which is engaged with both the groove (14) extending radially outwards and the groove (22) extending radially inwards.

7. Unit as per Claim 6, where the coupling element exhibits an annular disc (3).

8. Unit as per Claim 7, where the annular disk (3) is radially flexible.

9. Unit as per one of the Claims 6 to 8, where the groove extending radially inwards exhibits a first width in the axial direction, and the groove extending radially outwards exhibits a second width in the axial direction, where the axial strength of the coupling element is chosen in such a way that the sum of the first width and the second width minus double the axial strength corresponds to the axial travel which, with the given thread pitch, is caused by the housing element twisting vis-à-vis the second element by the maximum permitted angle of twist.

10. Unit as per one of the previous claims, where the sensor element (2) comprises an industrial process engineering sensor, particularly a pressure sensor, a flow sensor, a viscosity sensor, a level sensor, a pH sensor or another potentiometric sensor, a temperature sensor, a humidity sensor, a gas sensor or a turbidity sensor.

## Revendications

1. Dispositif comprenant
un boîtier de transmetteur (1), qui présente un premier filetage ;
un élément capteur (2), lequel présente un deuxième filetage (13), lequel est complémentaire au premier filetage et est en prise avec celui-ci ;
le boîtier de transmetteur et l'élément capteur pouvant tourner l'un par rapport à l'autre autour de l'axe des deux filetages et la rotation provoquant en raison du pas de filetage (13) une modification de la position axiale l'un par rapport à l'autre ;

des câbles, qui s'étendent de l'élément capteur (2) jusque dans le boîtier de transmetteur (1); et

une sécurité antirotation, afin d'éviter un endommagement des câbles, laquelle limite la faculté de rotation du boîtier de transmetteur par rapport à l'élément capteur à une plage angulaire, **caractérisé en ce que**

la sécurité antirotation comprend deux blocages axiaux (3, 14, 22), de telle manière que la position axiale du boîtier de transmetteur par rapport au deuxième élément est limitée à une plage comprise entre deux positions extrêmes, laquelle plage est limitée par les blocages axiaux, les blocages axiaux (3, 14, 22) étant disposés de telle manière que la différence entre les positions extrêmes corresponde à la course axiale, qui est obtenue avec le pas défini des filetages par une rotation du boîtier de transmetteur (1) par rapport à l'élément capteur (2) d'un angle de rotation maximal admissible.

2. Dispositif selon la revendication 1, pour lequel le boîtier de transmetteur (1) ou l'élément capteur (2) comprend au moins deux parties cylindriques (10, 14, 20, 22) de rayons différents, dont l'axe de rotation est aligné avec l'axe des filetages, entre les au moins deux parties de rayons différents étant formé un palier radial, qui sert de surface de butée axiale pour un blocage axial de la sécurité antirotation.

3. Dispositif selon la revendication 2, pour lequel le boîtier de transmetteur ou l'élément capteur comprend une partie cylindrique, dont la surface latérale comporte une rainure annulaire (22), qui s'étend radialement vers l'intérieur et est limitée en direction axiale par un premier et un deuxième palier radial, le premier et le deuxième palier radial servant respectivement de surface de butée axiale pour l'un des deux blocages axiaux.

4. Dispositif selon l'une des revendications 1 à 3, pour lequel le boîtier de transmetteur ou l'élément capteur présente au moins une ouverture avec des parties cylindriques de rayons différents, dont l'axe de rotation est aligné avec l'axe des filetages, entre les au moins deux parties de rayons différents étant formé un palier radial, qui sert de surface de butée axiale pour un blocage axial de la sécurité antirotation

5. Dispositif selon l'une des revendications 1 à 4, pour lequel le boîtier de transmetteur ou l'élément capteur comprend une ouverture cylindrique, dont la surface latérale comporte une rainure annulaire (14), qui s'étend radialement vers l'extérieur (14) et est limitée en direction axiale par un premier et un deuxième palier radial, le premier et le deuxième palier radial servant respectivement de surface de butée axiale pour l'un des deux blocages axiaux.

6. Dispositif selon la revendication 5 et selon la revendication 3, pour lequel la sécurité antirotation comprend par ailleurs un élément de couplage (3), lequel est en prise à la fois avec la rainure (14) s'étendant radialement vers l'extérieur et avec la rainure (22) s'étendant radialement vers l'intérieur.

7. Dispositif selon la revendication 6, pour lequel l'élément de couplage présente un disque annulaire (3).

8. Dispositif selon la revendication 7, pour lequel le disque annulaire (3) est flexible dans le sens radial.

9. Dispositif selon l'une des revendications 6 à 8, pour lequel la rainure s'étendant radialement vers l'intérieur présente en direction axiale une première largeur, et la rainure s'étendant radialement vers l'extérieur présente en direction axiale une deuxième largeur, l'épaisseur axiale de l'élément de couplage étant choisie de telle manière que la somme de la première largeur et de la deuxième largeur moins la double épaisseur axiale correspond à la course axiale, qui est obtenue avec le pas défini des filetages par une rotation du boîtier de transmetteur par rapport à l'élément capteur d'un angle de rotation maximal admissible.

10. Dispositif selon l'une des revendications précédentes, pour lequel l'élément capteur (2) comprend un capteur de la technique de mesure de process industrielle, notamment un capteur de pression, un capteur de débit, un capteur de viscosité, un capteur de niveau, un capteur pH ou un autre capteur potentiométrique, un capteur de température, un capteur d'humidité, un capteur de gaz ou un capteur de turbidité.

**Fig. 1**

**Fig. 2**

*Fig. 3*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3541390
- EP 0074922 A
- EP 0303399 A
- DE 19652094
- US 4756207 A